Europäisches Patentamt

European Patent Office

Office européen des brevets

(11) Veröffentlichungsnummer: **0 311 085**
**A2**

## (12) EUROPÄISCHE PATENTANMELDUNG

(21) Anmeldenummer: 88116585.6

(22) Anmeldetag: 06.10.88

(51) Int. Cl.⁴: **H01R 9/05 , H02G 15/18 , H02G 15/013 , H02G 15/08**

---

(30) Priorität: 09.10.87 DE 3734249

(43) Veröffentlichungstag der Anmeldung:
**12.04.89 Patentblatt 89/15**

(84) Benannte Vertragsstaaten:
**AT BE CH DE FR GB IT LI LU NL SE**

(71) Anmelder: **RXS Schrumpftechnik-Garnituren GmbH**
**Profilstrasse 4**
**D-5800 Hagen 1(DE)**

(72) Erfinder: **Greisinger, Martin, Dipl.-Ing. (FH)**
**Brinkhofstrasse 34**
**D-5860 Iserlohn(DE)**

(74) Vertreter: **Mehl, Ernst, Dipl.-Ing. et al**
**Postfach 22 13 17**
**D-8000 München 22(DE)**

---

(54) **Kabelmuffe für Breitbandkommunikationsanlagen.**

(57) Die Erfindung betrifft eine Kabelmuffe für Breitbandkommunikation mit Auslässen (6) für Koaxialkabel (8). Eine schlauchförmige Umhüllung (1) ist mit einer Innenbeschichtung aus Schmelzkleber versehen und an den Stirnseiten durch Verbindung in den Zwickelbereichen zu Auslässen zumindest vorgeformt. Weiterhin können in den stirnseitigen Bereichen Kontaktierungsmittel eingebracht sein, durch die eine Kontaktierung der Schirme bzw. Außenleiter erfolgt. Die Kontaktierungsmittel können aus leitfähigem Klebermaterial oder aus metallischen Folien bzw. Geflechten bestehen.

EP 0 311 085 A2

FIG 1

## Kabelmuffe für Breitbandkommunikationsanlagen.

Die Erfindung betrifft eine Kabelmuffe für Verteilerzwecke, insbesondere für Baugruppen-Gehäuse bei Breitbandkommunikationsanlagen, aus einem schrumpfbaren Formkörper mit den Kabelanschlüssen entsprechenden, stirnseitigen Auslässen für Kabel, insbesondere Koaxialkabel und mit Dichtungsmaterial in den Auslaßbereichen.

Es ist beispielsweise aus der DE-PS 31 27 869 eine Kabelmuffe bekannt, die zur Herstellung eines Anschlusses oder Abzweiges von Koaxialkabeln geeignet ist und die aus einem quergeteilten Formkörper aus schrumpfbarem Material besteht, der auf die elektrische Baugruppe aufgeschrumpft wird. Für die Aus- bzw. Einführung der Koaxialkabelenden sind angeformte, ebenfalls schrumpfbare Kabelauslässe vorgesehen. Die Kontaktierung der Koaxialkabel erfolgt in Steckerbuchsen, die an der elektrischen Baugruppe angeordnet sind. Für die verschiedenen Typen von Koaxialkabeln müssen dementsprechend auch verschiedene Anpassungen vorgesehen werden. Dies erfordert eine entsprechend aufwendige Muffenform, sowie geeignete Anpassungsvorkehrungen.

Für vorliegende Erfindung ergibt sich nun die Aufgabe, eine Kabelmuffe zu schaffen, die in vereinfachter Aufbauform bereits werkseitig so weit vorbereitet bzw. vorgestaltet ist, daß der endgültige Einsatz problemlos ablaufen kann. Die gestellte Aufgabe wird nun mit einer Kabelmuffe der eingangs erläuterten Art dadurch gelöst, daß der schrumpfbare Formkörper aus einer schlauchförmigen, über das Baugruppen-Gehäuse und über die Auslässe hinwegreichenden Umhüllung besteht, daß die Auslässe werkseitig durch Verbindung der in den Zwickelbereichen zwischen den Kabelanschlüssen sich gegenüberliegenden Umhüllungsbereiche ge bildet sind und daß vorzugsweise bei Wärmezufuhr zumindest bereichsweise schmelzende Dichtungsmaterialien, insbesondere aus Schmelzkleber, in den Auslaßbereichen angeordnet sind.

Bei der Kabelmuffe gemäß der Erfindung ist nun von Vorteil, daß das relativ einfache Gebilde, bestehend aus einem auf der Innenseite mit Dichtungsmittel, vorzugsweise mit Schmelzkleber, beschichteten Schrumpfschlauch, in einfachster Weise montiert werden kann. Bei dem genannten Stand der Technik hingegen sind zwei vorgeformte Schrumpfkörper vorhanden, die erst am Montageort eingesetzt werden. Die schlauchförmige Muffenart gemäß der Erfindung ist besonders universell und zudem auch entsprechend preiswert, so daß sie diesbezüglich auch ohne Bedenken nur für kurzzeitigen Einsatz Verwendung finden kann. Außerdem ergeben sich weiterhin besondere Montagevorteile dadurch, daß bereits werkseitig eine Vorformung so weit vorgenommen ist, daß der endgültige Einsatz völlig problemlos erfolgen kann. Bei einer ersten Ausführungsform ist die schlauchförmige Umhüllung bereits in den Zwickelbereichen werkseitig zusammengefügt, so daß nach der Einführung der Kabel nur mehr die Auslaßbereiche geschrumpft werden müssen, obwohl lediglich eine einfache schlauchförmige Umhüllung Verwendung fand. Aus Vorsorge gegen Beschädigungen und dergleichen können die offenen Auslässe mit entsprechenden, demontierbaren Abschlüssen versehen sein, die unter Umständen auch die Forderungen für Dichtigkeit erfüllen.

Eine noch weiter vereinfachte Ausführungsform gemäß der Erfindung besteht darin, daß bereits werkseitig eine komplette, geschlossene und dichte Baueinheit hergestellt ist, deren Ausgangsprodukt wiederum lediglich eine einfache schlauchförmige Umhüllung ist. In den Auslässen sind hier bereits Kabelendstücke angeordnet und dicht eingeschrumpft, so daß die weiteren Anschlüsse an diesen Kabelendstücken erfolgt. Diese Kabelendstücke sind gegebenenfalls mit entsprechenden Kupplungsteilen bestückt.

Die Herstellung dieser geschilderten Baueinheiten gemäß der Erfindung wird nachfolgend näher erläutert.

Die Abdichtung in den Dichtungsbereichen erfolgt durch die Innenbeschichtung aus vorzugsweise Schmelzkleber, der bei entsprechender Klemmung der gegenüberliegenden Wandungen in den Zwickelbereichen zwischen den einzelnen Koaxialkabeln zur gewünschten Abdichtung führt. Für die zumindest zeitweise Klemmung in den Zwickelbereichen können Druckstempel, Zangengebilde oder Klammern verwendet werden, mit deren Hilfe die Wandungen der Umhüllung entweder direkt oder über ein die Zwickelbereiche füllendes Füllstück so stark und so lange zusammengepreßt werden, bis der Schmelzkleber wieder erkaltet ist. Solche Füllstücke können sowohl aus festem bzw. starrem Material oder auch aus plastischen oder elastischen Werkstoffen bestehen.

Ferner ist von Vorteil, daß gemäß der Erfindung in den Dichtungsbereichen zumindest bereichsweise auch elektrisch leitende Kontaktmittel eingelagert werden können, so daß hiermit eine Schirmung erreicht werden kann, die gegebenenfalls mit den Außenleitern oder mit einer Kabelschirmung kontaktiert werden kann. Diese Kontaktmittel können zum Beispiel aus leitfähigem und bei Wärmezufuhr schmelzendem Material, aus Metallfolien bzw. Metallgeflechten bestehen. Im ersten Fall wird mit dem Kontaktmittel zugleich die Abdichtung vorgenommen, während in den anderen Fällen eine Kombination aus Dichtmitteln und Kontaktmitteln eingesetzt wird. Im Fall der Verwendung von Füllstücken in den Zwickelbereichen läßt sich die Kontaktierung auch mit diesen herstellen, wenn elektrisch leitende Materialien verwendet werden.

Die Erfindung wird nun anhand von neun Figuren näher erläutert.

Figur 1 zeigt eine Kabelmuffe aus einem einfachen, ungeteilten Schrumpfschlauchstück.

Figur 2 verdeutlicht eine Herstellung der Dichtung im Zwickelbereich der Kabelmuffe.

Figur 3 zeigt die Abdichtung im Zwickelbereich mit Hilfe eines Füllstückes.

Figur 4 zeigt eine Stirnseite der Kabelmuffe mit direkter Dichtung durch Klebung.

Figur 5 zeigt eine Stirnseite mit direkter Dichtung unter Einsatz von Klammern in den Zwickelbereichen.

Figur 6 zeigt eine Stirnseite mit Einsatz von Füllstücken und Klammern in den Zwickelbereichen.

Figur 7 zeigt eine Stirnseite der Kabelmuffe mit angepaßten Füllstücken ohne Fixierungen.

Figur 8 zeigt die einzelnen Schichten der Umhüllung.

Figur 9 verdeutlicht eine bereichsweise getrennte Anordnung von Dichtungs- und Kontaktmitteln.

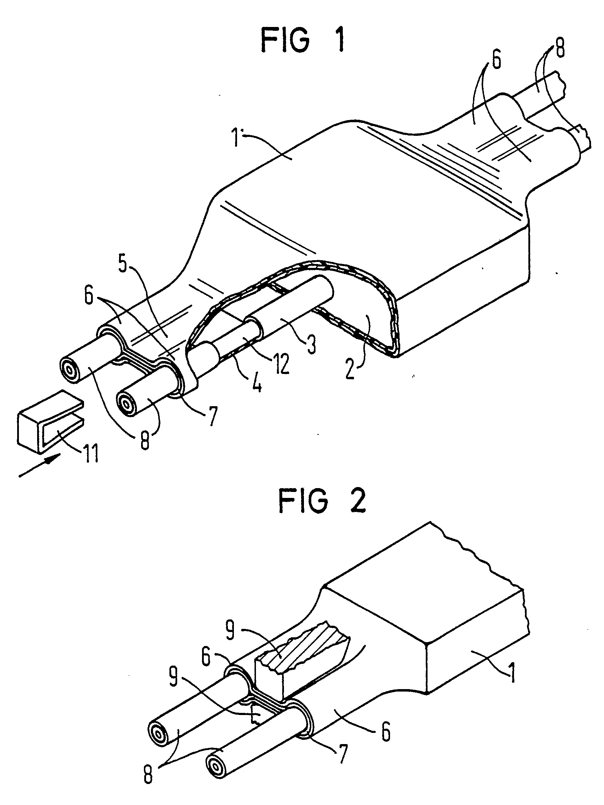

Figur 1 zeigt eine Kabelmuffe 1 gemäß der Erfindung, die aus einem Abschnitt eines Schrumpfschlauches gebildet ist und über die gesamte elektrische Baugruppe hinwegreicht und die an den beiden Stirnseiten zugleich zur Bildung der Auslässe 6 für die Kabel 8 geformt ist. In den Stirnbereichen der Kabelmuffe 1 wird der Schumpfschlauch an die Kabelenden 8 durch Schrumpfen dicht angeformt, wobei eine Innenbeschichtung aus Dichtungsmittel 7, insbesondere aus einem Schmelzkleber, für die nötige Dichtung sorgt. In den Zwickelbereichen 5 zwischen den einzelnen Kabeln 8 wird die Umhüllung 1 mit Hilfe von Andruckmitteln an die Kabelmäntel angeformt, so daß auch in diesen Zwickelbereichen 5 die erforderliche Dichtung zwischen den gegenüberliegenden Wandungen der Umhüllung 1 erfolgt. Bei der ersten Ausführungsform bleiben dann die Auslässe offen und ungeschrumpft und werden je nach Bedarf mit losen oder dichten Abschlüssen versehen.

Bei der zweiten Ausführungsform werden jedoch auch die Auslässe bereits auf die Kabelendstücke aufgeschrumpft. Das Anpressen der Wandungen der Umhüllung 1 in den Zwickelbereichen 5 muß zumindest zeitweise erfolgen und zwar während der Wärmezufuhr für den Schrumpfvorgang bis zum Erkalten des Schmelzklebers. Eine derartige Anformung kann beispielsweise durch eine Klammer 11 erfolgen, die zwischen den Kabeln 8 eingeschoben wird, wobei die Wandungen der Umhüllung 1 von außen umfaßt werden. Der angedeutete Pfeil weist auf das Aufschieben zwischen den Kabeln hin. Bei der Einführung von Koaxialkabeln werden diese vom Ende her von ihrem Kabelmantel zur Kontaktierung des Außenleiters 12 befreit, während die Innenleiter der Koaxialkabel in die hierfür vorgesehenen Aufnahmen innerhalb der Anschlußbuchsen 3 eingeführt werden.

Bei Kabelmuffen gemäß der Erfindung mit eingelagerten Kontaktmitteln 4 wird in den Stirnbereichen mit Hilfe von eingelagerten Kontaktmitteln 4 die Kontaktierung der Außenleiter 12 oder der Kabelschirme vorgenommen, wobei diese Kontaktmittel 4 selbst auch eine Abschirmwirkung in den Stirnbereichen vermitteln können, wenn diese flächenhaft, zum Beispiel als Folie oder als Geflecht, ausgebildet sind. Die Kontaktmittel 4 können beispielsweise aus einer elektrisch leitenden Beschichtung der Umhüllung 1 bestehen, die zum Beispiel gleichzeitig die Funktion der Dichtung in den Dichtungsbereichen zu den Kabeln und in den Zwickelbereichen erfüllen. Hierfür eignen sich zum Beispiel elektrisch leitende Klebermassen, die neben der Schirm- und Kontaktierfunktion auch die Funktion des Dichtens vermitteln können. Außerdem läßt sich die Kontaktierung und Schirmung gemäß der Erfindung mit Hilfe einer Folienbeschichtung aus elektrisch leitendem Material herstellen, wobei hier, wie auch bei dem vorhergehenden Beispiel, die Kontaktierung bis zum Gehäuse der elektrischen Baugruppe erfolgen kann, so daß die gesamte Kabelmuffe mit einer eingelagerten Schirmung versehen ist. Durch die schrumpfbare Umhüllung 1 wird die Kontaktierung aller in Frage kommenden Teile erst nach der Schrumpfung perfekt, da erst dann die innige und sichere Berührung gewährleistet ist. Eine weitere Möglichkeit für die Ausführung der Kabelmuffe mit elektrischer Schirmfunktion gemäß der Erfindung ist dann gegeben, wenn die Kontaktmittel aus einer elektrisch leitenden Folie gebildet sind, die zugleich so viel Stützwirkung aufweist, daß von ihr auch die Funktion des Baugruppengehäuses mit übernommen werden kann. Auf diese Weise könnte auch das bisher übliche Baugruppengehäuse ersetzt werden. Die Anpassung an die Kabel bzw. Kabelendstücke 8 erfolgt dann durch Zusammenpressen der Folie in den Stirnbereichen bis auf die Außenleiter bzw. Schirmung der Kabel, wobei hierfür zweckmäßigerweise längsgerichtete Fiederungseinschnitte eingebracht werden. Durch die letztgenannte Maßnahme ist der erforderliche Durchmesserausgleich in einfacher Weise zu bewerkstelligen.

Die Figur 2 deutet ein Verfahren zum Herstellen der Dichtung in den Zwickelbereichen der Kabelmuffe an. So werden hier die sich gegenüber liegenden Wandungen der Umhüllung 1 mit Hilfe von Stempeln oder zangenähnlichen Werkzeugen 9 während - zumindest beim zweiten Ausführungsbeispiel - des Schrumpfvorganges zusammengedrückt, so daß sich die beiden Auslässe 6 für die Kabel 8 ergeben. Dieses Zusammenpressen muß mindestens solange erfolgen, bis die geschmolzene Dichtung 7 wieder erkaltet und somit die erforderliche Haftung gewährleistet ist. Dann können die Preßwerkzeuge 9 wieder abgenommen werden.

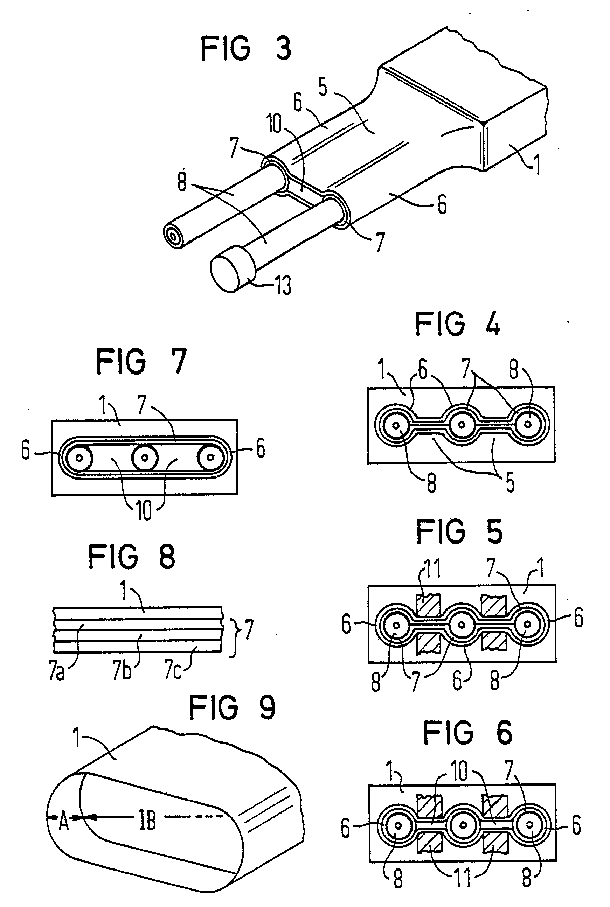

Die Figur 3 zeigt eine Abdichtung im Zwickelbereich 5 zwischen den Kabeln 8 mit Hilfe eines Füllstückes 10, welches beispielsweise aus plastischem Material besteht und das während des Schrumpfvorganges infolge der Schrumpfkräfte durch Verformen des plastischen Materials an die Umgebungsflächen dichtend angepaßt wird. Auch hier können entsprechende Preßwerkzeuge verwendet werden, um die Wandungen der Umhüllung 1 gegen das Füllstück 10 zu pressen, besonders dann, wenn die Höhe des Füllstückes 10 geringer ist als die Durchmesser der Kabel 8. Die Abdichtung in den Trennfugen erfolgt am besten wieder mit einer Beschichtung 7 der Umhüllung 1 aus Schmelzkleber. In dieser Figur ist weiterhin angedeutet, daß die Kabelmuffe werksseitig mit in den Auslässen 6 eingeschrumpften Kabelendstücken 8 versehen werden kann, wobei diese Kabelenden entsprechende Abschlüsse 13 aufweisen. Diese Abschlüsse 13 können bei Bedarf Steckereinheiten oder auch nur elektrische Abschlußgebilde enthalten, die mit einer entsprechend dichten Abschlußumhüllung ausgestattet sind. Auf diese Weise lassen sich werksseitig abgeschlossene Breitbandkommunikationseinheiten in kompletter Form herstellen, durch die die Montagearbeiten enorm reduziert sind, wobei zusätzlich eine fehlerhafte Montage nahezu ausgeschlossen ist. Die Anschlußeinheiten können dann je nach Bedarf beschaltet werden. Die Bestückung mit solchen kurzen Kabelendstükken 8 kann an allen oder auch nur an einzelnen Auslässen vorgenommen werden.

Die Figur 4 zeigt eine Dreifacheinführung von Kabeln 8 in einer Stirnseite einer Kabelmuffe 1, wobei die einzelnen Kabelauslässe 6 durch zeitweises Zusammenpressen der gegenüberliegenden Umhüllungswandungen zwischen den Kabeln 8 erfolgte. Die Dichtung 7 kann je nach Bedarf den vorangegangenen Beispielen entsprechend ausgeführt sein.

Die Figur 5 zeigt ein Beispiel, das dem der Figur 4 bezüglich der Ausführung der Dichtung ähnelt, bei dem jedoch Klammerelemente 11 zwischen den Kabeln 8 als Form- und Sicherungselemente angeordnet sind.

Die Figur 6 verdeutlicht ein Ausführungsbeispiel mit Füllstücken 10 in den Zwickelbereichen zwischen den Kabeln 8, wobei auch hier Anpreßelemente 11 angeordnet sind, die je nach Anwendungsfall bleibend oder auch nur vorübergehend aufgesetzt sind. Sie sind bei diesem Ausführungsbeispiel jedoch nötig, da die Füllstücke 10 kleiner sind als die Durchmesser der Kabel 8, so daß die Umhüllung 1 in die sich ergebenden Täler der Zwickelbereiche eingepreßt werden muß.

Die Figur 7 zeigt hingegen ein Ausführungsbeispiel, bei dem die Füllstücke 10 in ihrer Höhe den Durchmessern der Kabel 8 ent sprechen, so daß sich beim Schrumpfvorgang automatisch die Anpassung der Umhüllung 1 an die Füllstücke 10 wie auch an die Kabel 8 ergibt. Die Dichtungselemente 7 entsprechen den bereits erläuterten Beispielen.

Die Figur 8 erklärt ein Beispiel für einen Schichtenaufbau der Umhüllung 1 mit den entsprechenden Dichtungs- und Kontaktmitteln. Das Kontakt- und Dichtmittel 7 kann nun aus drei Schichten bestehen, wobei das Kontaktmittel 7b zwischen zwei zum Beispiel gleichartigen Dichtungsmitteln 7a und 7c liegt, diese Ausführungsform ist als Randdichtung im äußeren Bereich A (siehe Figur 9) der Umhüllung 1 zweckmäßig, da eine dichte Verbindung zwischen der Umhüllung 1 und den Kabelmänteln hergestellt werden muß. Im inneren Bereich IB der Umhüllung 1 hingegen (siehe Figur 9), in dem die Kontaktierungen mit den Schirmen bzw. den Außenleitern der Kabel vorgenommen werden müssen, darf jedoch die innere Dichtungsschicht 7c nicht vorhanden sein, da hier die Leitfähigkeit sichergestellt werden muß, wie sie die Mittelschicht 7b als Metallfolie bietet. Bei Ausführungsformen mit leitfähiger Dichtungsmasse ist eine derartige bereichsweise Unterteilung nicht notwendig.

## Ansprüche

1. Kabelmuffe für Verteilerzwecke, insbesondere für Baugruppen-Gehäuse bei Breitbandkommunikationsanlagen, aus einem schrumpfbaren Formkörper mit den Kabelanschlüssen entsprechenden, stirnseitigen Auslässen für Kabel, insbesondere Koaxialkabel und mit Dichtungsmaterial in den Auslaßbereichen,
**dadurch gekennzeichnet,**
daß der schrumpfbare Formkörper aus einer schlauchförmigen, über das Baugruppen-Gehäuse und über die Auslässe (6) hinwegreichenden Umhüllung (1) besteht, daß die Auslässe (6) werkseitig durch Verbindung der in den Zwickelbereichen (5) zwischen den Kabelanschlüssen (3) sich gegenüberliegenden Umhüllungsbereiche gebildet sind und daß vorzugsweise bei Wärmezufuhr zumindest bereichsweise schmelzende Dichtungsmaterialien (7), insbesondere aus Schmelzkleber, in den Auslaßbereichen (6) angeordnet sind.

2. Kabelmuffe nach Anspruch 1,
**dadurch gekennzeichnet,**
daß in den vorgeformten Auslässen (6) demontierbare Abschlüsse angeordnet sind.

3. Kabelmuffe nach Anspruch 1,
**dadurch gekennzeichnet,**
daß werkseitig Kabelendstücke (8) in den Kabelanschlüssen (3) elektrisch angeschlossen sind, daß werkseitig die schrumpfbare Umhüllung (1) im Bereich des Baugruppengehäuses und in den Bereichen der Auslässe (6) bis auf die Kabelmäntel der Kabelendstücke (8) zu einer kompletten, geschlossenen und dichten Verteiler-Baueinheit aufgeschrumpft ist.

4. Kabelmuffe nach Anspruch 3,
**dadurch gekennzeichnet,**
daß die Kabelendstücke (8) an den freien Enden Abschlußeinheiten aufweisen.

5. Kabelmuffe nach einem der vorhergehenden Ansprüche,
**dadurch gekennzeichnet,**
daß die Auslässe (6) durch Zwischenlage eines Füllstückes (10) in den Zwickelbereichen (5) zwischen den eingeführten Kabeln (8) und den sich gegenüberliegenden Umhüllungsbereichen gebildet sind.

6. Kabelmuffe nach einem der vorhergehenden Ansprüche,
**dadurch gekennzeichnet,**
daß in den Zwickelbereichen (5) als Klemmittel eine Klammer (11) angeordnet ist.

7. Kabelmuffe nach einem der Ansprüche 1 bis 5,
**dadurch gekennzeichnet,**
daß in den Zwickelbereichen (5) als Klemmittel zeitweise zangen-oder stempelartige Klemmvorrichtungen angeordnet sind.

8. Kabelmuffe nach einem der vorhergehenden Ansprüche,
**dadurch gekennzeichnet,**
daß die schrumpfbare Umhüllung (1) längsgeteilt und entlang dieser Teilung mit einem Verschlußsystem versehen ist.

9. Kabelmuffe nach einem der vorhergehenden Ansprüche,
**dadurch gekennzeichnet,**
daß elektrisch leitende Kontaktmittel (4, 7, 10) zumindest bereichsweise in den stirnseitigen Dichtungsbereichen (7) eingelagert sind, die nach dem Schrumpfen der Auslässe (6) der Umhüllung (1) eine Kontaktierung zwischen den elektrisch zu verbindenden Teilen, insbesondere zwischen Kabelschirmen bzw. Außenleitern und gegebenenfalls dem Baugruppen-Gehäuse, herstellen.

10. Kabelmuffe nach Anspruch 9,
**dadurch gekennzeichnet,**
daß die Dichtungselemente (7) aus leitfähigem Material, insbesondere aus leitfähigem Kleber, bestehen und zugleich die Kontaktmittel bilden.

11. Kabelmuffe nach Anspruch 9,
**dadurch gekennzeichnet,**
daß das Kontaktmittel (4) aus einer elektrisch leitfähigen Folie besteht, das im Bereich der vom Kabelmantel abgesetzten Außenleiter der Koaxialkabel bzw. der Schirme angeordnet ist.

12. Kabelmuffe nach Anspruch 9,
**dadurch gekennzeichnet,**
daß das Kontaktmittel (4) aus einem elektrisch leitfähigen Geflecht gebildet ist.

13. Kabelmuffe nach einem der Ansprüche 9 bis 12,
**dadurch gekennzeichnet,**
daß das Kontaktmittel (4) den Bereich der Auslässe (6) und zumindest einen Teil des Baugruppengehäuses umfaßt.

14. Kabelmuffe nach einem der Ansprüche 9 bis 12,
**dadurch gekennzeichnet,**
daß das Kontaktmittel (4) als Beschichtung der Umhüllung (1) ausgebildet ist.

15. Kabelmuffe nach einem der Ansprüche 9 bis 13,
**dadurch gekennzeichnet,**
daß das Kontaktmittel als selbständiges Bauteil eingelagert ist.

16. Kabelmuffe nach Anspruch 15,
**dadurch gekennzeichnet,**
daß das Kontaktmittel als Stützteil mit an die Kabel anpassungsfähigen Endbereichen, insbesondere durch Fiederung, ausgebildet ist.

17. Kabelmuffe nach Anspruch 5 und 9,
**dadurch gekennzeichnet,**
daß die Füllstücke (10) als Kontaktmittel aus leitfähigem Material bestehen.

# FIG 1

# FIG 2

EP 0 311 085 A2

FIG 3

FIG 7

FIG 8

FIG 9

FIG 4

FIG 5

FIG 6